# EUROPÄISCHE PATENTSCHRIFT

(11) **EP 3 457 530 B1**
(45) Veröffentlichungstag und Bekanntmachung des Hinweises auf die Patenterteilung: **24.11.2021**
(21) Anmeldenummer: 17191650.5
(22) Anmeldetag: 18.09.2017
(51) Int. Cl.: H02K 1/18, H02K 15/03, H02K 21/26, H02K 41/03, H02K 41/02, H02K 1/17, H02K 16/04, B65G 54/02

(54) **BAUTEILSATZ, SEKUNDÄRTEIL UND EISENLOSER LINEARMOTOR**
SET OF PARTS, SECONDARY PART, AND IRONLESS LINEAR MOTOR
JEU D'ÉLÉMENTS, ROTOR ET MOTEUR LINÉAIRE SANS FER

(43) Veröffentlichungstag der Anmeldung: 20.03.2019
(73) Patentinhaber: ETEL S.A., 2112 Môtiers (CH)
(72) Erfinder: GAUSE, Alfred, 73666 Baltmannsweiler (DE); BAVEREL, Vivien, 25500 Morteau (FR)
(74) Vertreter: Maikowski & Ninnemann Patentanwälte Partnerschaft mbB

(56) Entgegenhaltungen:
- JP-A- 2010 130 843
- JP-A- 2014 166 111
- TW-A- 201 637 325
- TW-B- I 594 545

## Beschreibung

Diese Schrift betrifft Ausführungsformen eines Bauteilsatzes zur Ausbildung eines Sekundärteils für einen Linearmotor, insbesondere zur Ausbildung eines Sekundärteils für einen eisenlosen Linearmotor, Ausführungsformen eines Sekundärteils für einen Linearmotor, insbesondere eines Sekundärteils für einen eisenlosen Linearmotor, sowie Ausführungsformen eines eisenlosen Linearmotors.

Beispiele für einen eisenlosen Linearmotor (damit sind insbesondere kernlose Linearmotoren gemeint) sind aus der US 2006/0175907 A1, der US 4,749,921 und der EP 2 884 638 A1 bekannt. Außerdem beschreiben die europäische Patentanmeldung mit der Anmeldenummer EP17178938.1 und das Dokument JP2010130843 Aspekte eines eisenlosen Linearmotors, insbesondere des Primärteils für einen eisenlosen Linearmotor.

Linearmotoren werden z.B. eingesetzt, wenn es um eine hochgenaue und gegebenenfalls auch schnelle Positionierung von Objekten, wie zum Beispiel eines Maschinenteiles einer Werkzeugmaschine, geht. Dabei kann das Primärteil des Linearmotors über eine geeignete Schnittstelle unmittelbar mit dem zu bewegenden Maschinenteil oder sonstigem Objekt verbunden sein. Das heißt, im Gegensatz zu einem konventionellen Rotationsmotor entfällt hier üblicherweise die Notwendigkeit eines zwischen den Linearmotor und das anzutreibende Objekt geschalteten Getriebes.

Für Anwendungen, die eine besonders präzise Positionierung erfordern, eignen sich vor allem so genannte eisenlose Linearmotoren, bei denen mindestens einer am Primärteil vorgesehenen Spule kein Kern, wie ein Eisenkern, zugeordnet ist. Hierdurch lassen sich störende Rastkräfte vermeiden. Es sind jedoch entsprechend größere Spulenströme erforderlich, um auch ohne Kern hinreichend große Kräfte am Primärteil des Linearmotors erzeugen zu können. Dies erfordert wiederum eine entsprechend gute Kühlung der Spule (n). Die Spulen werden zum Beispiel in Form vorgeformter Einzelspulen bereitgestellt. Das heißt, der zur Bildung der Spulen verwendete, z.B. mit einer Isolationsschicht versehene Draht wird nicht unmittelbar auf einen Kern gewickelt, sondern beispielsweise ohne Kern gewickelt und sodann zur Ausbildung des Elektromotors verbaut. Hierbei kann ein Aufsetzen der kernlosen Einzelspule auf einen in den Elektromotor integrierten Eisenkern erfolgen; es kann aber auch vorgesehen sein, die Einzelspule als so genannte "Luftspule" in dem Elektromotor ohne zugehörigen Kern zu betreiben.

Insbesondere, wenn ein Elektromotor, zum Beispiel in Form eines Linearmotors, für eine hochgenaue und gegebenenfalls auch schnelle Positionierung von Objekten, wie zum Beispiel eines Maschinenteiles einer Werkzeugmaschine, eingesetzt werden soll, ist ein geringes Gewicht der verwendeten Spulen vorteilhaft. Hierzu kann der Verzicht auf einen Eisenkern einen wesentlichen Beitrag liefern. Andererseits sind dann - wie gesagt - entsprechend größere Spulenströme erforderlich, um auch ohne Eisenkern hinreichend große Kräfte am Motor erzeugen zu können. Dies erfordert wiederum eine besonders gute Kühlung der Spulenanordnung. In der EP 2 808 986 A1 sind diesbezüglich mehrere Einzelspulen dargestellt, die zur Kühlung auf einem großflächigen Kühlkörper angeordnet sind.

Nicht nur das Primärteil stellt eine Herausforderung bei den eisenlosen Linearmotoren dar. Mit Blick auf das Sekundärteil des Linearmotors kann z.B. erforderlich sein, dass dieses eine auf den designierten Anwendungsfall angepasste Länge aufweist. Denn anders als bei einem Rotationsmotor kann bei einem Linearmotor, wie gerade schon ausgeführt worden ist, das zu bewegenden Maschinenteil direkt mit dem Primärteil verbunden sein, sodass die Wegstrecke, entlang der sich das Primärteil bewegen kann, im Wesentlichen der Länge des Sekundärteils entsprechen kann.

Andererseits wird stets eine möglichst kostengünstige Fertigung von Linearmotoren angestrebt, wobei dieses Ziel schwer zu erreichen ist, wenn jede infrage kommende Länge individuell hergestellt werden muss.

Gleichzeitig ist es aber erforderlich, dass wenn ein Sekundärteil aus mehreren Einzelteilen verbundartig ausgebildet wird, beispielsweise sodass es die für den designierten Anwendungsfall angepasste Länge aufweist, dieses trotzdem noch Anforderungen betreffend die mechanische Stabilität erfüllt.

Somit stellt sich die Aufgabe, Mittel vorzuschlagen, mit denen ein Sekundärteil hinsichtlich seiner Länge individuell ausgebildet werden kann und gleichzeitig eine hohe mechanische Stabilität aufweist.

Hiervon ausgehend wird vorliegend gemäß dem unabhängigen Anspruch 1 ein Bauteilsatz zur Ausbildung eines Sekundärteils für einen Linearmotor vorgeschlagen. Merkmale einiger Ausführungsbeispiele sind in den Unteransprüchen angegeben. Die Merkmale der Unteransprüche können miteinander zur Ausbildung weiterer Ausführungsformen kombiniert werden, sofern nicht ausdrücklich etwas anderes angegeben ist.

Gemäß einem ersten Aspekt eignet sich der Bauteilsatz zur Ausbildung eines Sekundärteils für einen Linearmotor mit einer Länge, die wenigstens ein ganzzahliges Vielfaches des Doppelten einer Einheitslänge beträgt. Der Bauteilsatz umfasst eine Vielzahl identisch dimensionierter Magnetpolplatten, wobei jede Magnetpolplatte die Einheitslänge aufweist; und eine Vielzahl Halterungen, von der jede zur Aufnahme von wenigstens zwei der Magnetpolplatten ausgebildet ist, wobei die Halterungen wenigstens zwei identisch dimensionierte erste Halterungen und wenigstens eine zweite Halterung umfassen, und wobei die wenigstens eine zweite Halterung mindestens doppelt so lang dimensioniert ist wie jede der ersten Halterungen, sodass sie wenigstens die doppelte Anzahl von Magnetpolplatten aufnehmen kann. Der Bauteilsatz umfasst weiter eine Vielzahl Abstandsglieder, von der jedes zur beidseitigen Aufnahme von wenigstens je einer der Halterungen ausgebildet ist, wobei ein erstes Abstandsglied eine Länge aufweist, die um wenigstens eine Einheitslänge von der Länge einer der ersten Halterungen abweicht.

Ein zweiter Aspekt betrifft ein Sekundärteil, das aus Komponenten des Bauteilsatzes gemäß dem ersten Aspekt ausgebildet ist. Das Sekundärteil weist eine erste Seite und eine zweite Seite auf, die einen Pfad für ein Primärteil des Linearmotors definieren. Das Sekundärteil ist derart aus den Komponenten des Bauteilsatzes ausgebildet, dass an beiden Seiten jeweils wenigstens zwei der Halterungen vorgesehen sind, wobei wenigstens ein erster Halterungsübergang an der ersten Seite, der zwischen den dort befindlichen Halterungen ausgebildet wird, in Längsrichtung des Sekundärteils um wenigstens eine Einheitslänge von einem zweiten Halterungsübergang an der zweiten Seite, der zwischen den dort befindlichen Halterungen ausgebildet wird, versetzt ist.

Der dritte Aspekt betrifft einen eisenlosen Linearmotor, der ein Sekundärteil gemäß dem zweiten Aspekt aufweist.

Nachstehend wird auf alle drei vorstehend genannten Aspekte Bezug genommen werden.

Bei einer Ausführungsform sind die Magnetpolplatten, die Halterungen sowie die Abstandsglieder derart konfiguriert, dass im Wesentlichen allein durch Anordnung einer Auswahl dieser Komponenten entlang einer Längsrichtung das Sekundärteil mit einer magnetischen Weglänge ausgebildet werden kann, die ein beliebiges ganzzahliges Vielfaches des Doppelten der Einheitslänge beträgt. Die Konfiguration dieser Komponenten kann weiter so ausfallen, dass die Anordnung der Magnetpolplatten entlang der Längsrichtung, die Anordnung der Halterungen entlang der Längsrichtung sowie die Anordnung der Abstandsglieder entlang der Längsrichtung jeweils die betragsmäßig gleiche Länge aufweisen.

Die Formulierung "im Wesentlichen allein" meint hier, dass neben den drei Basiskomponenten des Bauteilsatzes (Magnetpolplatten, Abstandsglieder und Halterungen) abgesehen von Zubehörteilen wie z.B. Mittel zur Befestigung der Halterungen an den Abstandsgliedern und/oder Mittel zur Befestigung der Magnetpolplatten an den Halterungen nichts weiter benötigt wird, um das Sekundärteil auszubilden. Somit kann ein mittels dem Bauteilsatz ausgebildetes Sekundärteil im Wesentlichen aus den drei Basiskomponenten (Magnetpolplatten, Abstandsglieder und Halterungen) bestehen.

Zum Beispiel werden zunächst die für ein Sekundärteil ausgewählten Halterungen mit den Magnetpolplatten bestückt. Zum Beispiel können die Magnetpolplatten an den Halterungen festgeklebt oder in anderer Weise befestigt werden.

Bei einer Ausführungsform des Bauteilsatzes sind die Halterungen bereits mit den Magnetpolplatten bestückt. Die Magnetpolplatten müssen als Teil des Bauteilsatzes also nicht notwendigerweise separat von den Halterungen vorliegen, sondern können bereits an den Halterungen befestigt sein.

Die Halterungen können aus einem Eisen gefertigt sein.

Zur Ausbildung des Sekundärteils können dann weiter zum Beispiel wenigstens zwei der Abstandsglieder ausgewählt und beidseitig mit den Halterungen, die bereits mit den Magnetpolplatten bestückt sein können, verbunden werden. Beispielsweise werden die Halterungen an beiden Seiten der Abstandsglieder befestigt, sodass die Magnetpolplatten einander gegenüberliegender Halterungen aufeinander ausgerichtet sind.

Die Magnetpolplatten weisen jeweils auf einer ersten Seite einen ersten magnetischen Pol (z.B. "Nord") sowie auf einer zweiten Seite einen zweiten, zum ersten komplementären Pol (z.B. "Süd") auf. Es ist zweckmäßig, die Magnetpolplatten entlang der Längsrichtung des Sekundärteils seitenalternierend anzuordnen. Bei der Installation des Sekundärteils wird z.B. derart vorgegangen, dass bei allen Magnetpolplattenpaaren (die den Pfad für das Primärteil ausbilden können), die jeweils durch eine Magnetpolplatte auf der ersten Seite und eine Magnetpolplatte auf der zweiten Seite des Sekundärteils gebildet werden, eine erste Magnetpolplattenseite (z.B. "Nord") der einen Magnetpolplatte einer zweiten Magnetpolplattenseite (z.B. "Süd") der anderen Magnetpolplatte zugewandt ist. Diese Anordnung von Magnetpolplatten ist üblich, wie bspw. die eingangs schon zitierte US 4,749,921 zeigt (s. bspw. Fig. 9 oder Fig. 10).

Die Magnetpolplatten können jeweils als Permanentmagnet ausgebildet sein. Bei einer Ausführungsform enthält der Bauteilsatz nur einen einzigen Typ einer Magnetpolplatte; d.h., alle Magnetpolplatten des Bauteilsatzes sind identisch ausgebildet.

Zum Beispiel sind die ersten Halterungen mit je zwei seitenalternierend angeordneten Magnetpolplatten bestückt, und die zweiten Halterungen mit je vier seitenalternierend angeordneten Magnetpolplatten.

Die Einheitslänge kann eine halbe magnetische Periode sein. Eine volle magnetische Periode wird demnach z.B. durch zwei zueinander benachbart und seitenalternierend angeordnete Magnetpolplatten erzielt.

Aufgrund der Differenz in den Längen zwischen einer jeweiligen ersten Halterung, einer jeweiligen zweiten Halterung sowie einem jeweiligen Abstandsglied kann der oben beschriebene Versatz zwischen dem ersten Halterungsübergang und dem zweiten Halterungsübergang erzielt werden. Dies erlaubt die Ausbildung eines Sekundärteils mit hoher mechanischer Stabilität.

Die Auswahl und Anordnung der Komponenten aus dem Bauteilsatz kann weiter derart erfolgen, dass ein zwischen zwei benachbarten Abstandsgliedern ausgebildeter Abstandsgliedübergang in Längsrichtung des Sekundärteils um wenigstens eine Einheitslänge sowohl von dem ersten Halterungsübergang als auch dem zweiten Halterungsübergang versetzt ist. Dies kann zu einer weiteren Stabilitätserhöhung des Sekundärteils beitragen.

Somit kann mit einer geringen Anzahl von unterschiedlichen Basiskomponenten ein Bauteilsatz bereitgestellt werden, der die Ausbildung eines Sekundärteils einer theoretisch beliebigen Länge, die wenigstens ein ganzzahliges Vielfaches des Doppelten einer Einheitslänge beträgt, ermöglicht.

Es reicht bei einer Ausführungsform des Bauteilsatzes zum Beispiel aus, dass die Halterungen nur eine Vielzahl der ersten Halterungen und eine Vielzahl der zweiten Halterungen umfassen, wobei jede der zweiten Halterungen doppelt so lang dimensioniert ist wie jede der ersten Halterungen. Es gibt somit nur zwei Typen von Halterungen.

Mit Blick auf die Abstandsglieder kann es zweckmäßig, aber auch ausreichend, sein, dass diese umfassen: erste Abstandsglieder mit einer Länge entsprechend der Einheitslänge, zweite Abstandsglieder mit einer Länge entsprechend einem Dreifachen der Einheitslänge, und dritte Abstandsglieder mit einer Länge entsprechend einem Vierfachen der Einheitslänge.

Im Wesentlichen allein mit diesen Komponenten lässt sich zum Beispiel ein erstes Sekundärteil mit einer Länge entsprechend dem Sechsfachen der Einheitslänge (drei volle magnetische Perioden), ein zweites Sekundärteil mit einer Länge entsprechend dem Achtfachen der Einheitslänge (vier volle magnetische Perioden) sowie ein drittes Sekundärteil mit einer Länge entsprechend dem Zehnfachen der Einheitslänge (fünf volle magnetische Perioden) usw. ausbilden, wobei gleichzeitig der oben beschriebene Versatz zwischen den ersten und zweiten Halterungsübergängen einerseits als auch zwischen den Halterungsübergängen und dem Abstandsgliedübergang (bzw. den Abstandsgliedübergängen) beibehalten wird, was weiter unten anhand der Figurenbeschreibung noch näher ausgeführt werden wird. Somit schließt bei einer Ausführungsform entlang der Längsrichtung des Sekundärteils an einer beliebigen Position (abgesehen vom Anfang/Ende) maximal einer von den Komponententypen Abstandsglied und Halterung ab, niemals jedoch beide.

Die Abstandsglieder, die zum Beispiel als Kunststoffspritzgussteile oder als Aluminiumgussteile ausgebildet sind, können jeweils eine Nut aufweisen die eine Führung für das Primärteil des Linearmotors bereitstellt. Außerdem können die Abstandsglieder jeweils wenigstens eine Aussparung aufweisen, die eine Befestigungsmittel zu Befestigung einer der Halterungen eingreifen kann.

Der eisenlose Elektromotor des dritten Aspektes ist beispielsweise hinsichtlich seiner elektromechanischen Funktion ausgebildet, wie es in der DE 10 2015 222 265 A1 und der EP 2 884 638 A1 beschrieben ist.

Der Bauteilsatz gemäß dem ersten Aspekt umfasst also die drei Grundkomponenten (hier auch als Komponententypen bezeichnet) Magnetpolplatten, Halterungen sowie Abstandsglieder, die jeweils vergleichsweise klein dimensioniert sein können und sich trotzdem in ihrer Gemeinsamkeit zur Ausbildung eines durchaus langen Sekundärteils eignen, der aufgrund der zueinander versetzten Übergängen zwischen den Halterungen und den Abstandsgliedern eine hohe Stabilität aufweisen kann.

Weitere Einzelheiten und Vorteile der Erfindung werden bei der nachfolgenden Beschreibung einiger Ausführungsbeispiele anhand der Figuren deutlich werden.

Es zeigen:
- Fig. 1: einen Ausschnitt eines bekannten Sekundärteils;
- Fig. 2A-B: jeweils exemplarisch und schematisch einen Ausschnitt einer perspektivischen Ansicht eines Sekundärteils gemäß einer oder mehreren Ausführungsformen;
- Fig. 3A-B: jeweils exemplarisch und schematisch einen Ausschnitt einer perspektivischen Ansicht eines Sekundärteils gemäß einer oder mehreren Ausführungsformen;
- Fig. 4A-C: jeweils exemplarisch und schematisch einen Ausschnitt einer perspektivischen Ansicht eines Sekundärteils gemäß einer oder mehreren Ausführungsformen; und
- Fig. 5: exemplarisch und schematisch einen Ausschnitt einer perspektivischen Ansicht eines Linearmotors gemäß einer oder mehreren Ausführungsformen.

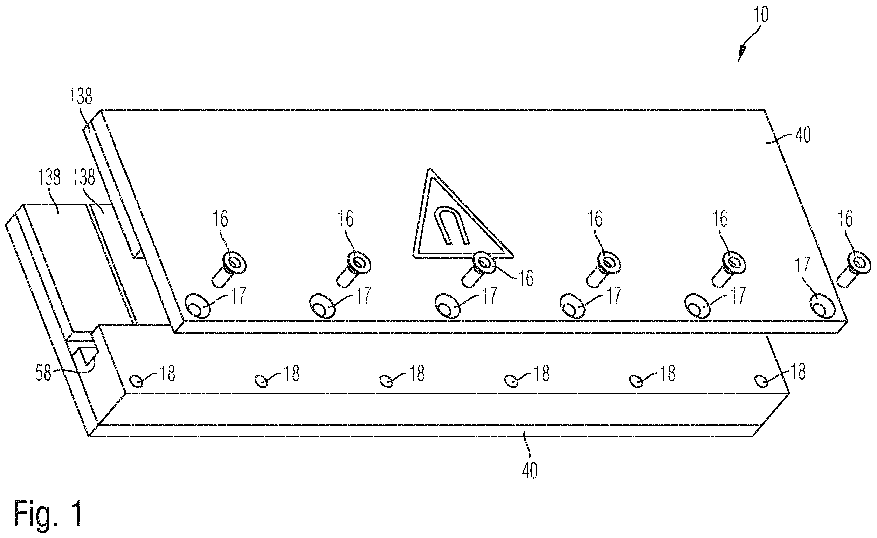

Zunächst zeigt die Figur 1 einen Ausschnitt eines bekannten Sekundärteils 10. Dort sind zwei identisch dimensionierte Halterungen 40 vorgesehen, die jeweils eine Vielzahl von identisch dimensionierten Magnetpolplatten 138 aufnehmen. Die Halterungen 40 sind beidseitig an einem Abstandsglied 50 befestigt, wobei das Abstandsglied 50 für diese Zwecke Aussparungen 18 aufweist, in die Schrauben 16, die zuvor durch Aussparungen 17 der Halterungen 40 geführt werden, eingreifen. Die beiden Halterungen 40 sind exakt aufeinander ausgerichtet. Das Abstandsglied 50 weist weiter eine Nut 58 auf, die eine Führung für einen in der Figur 1 nicht gezeigtes Primärteil ausbildet.

Das Sekundärteil 10 weist bei dem gezeigten Beispiel eine Länge auf, die einem Sechsfachen einer durch eine Magnetpolplatte 131 definierten Einheitslänge entspricht. Zur Veränderung der Länge des Sekundärteils 10 müssten also die Halterungen 40 als auch das Abstandsglied 50 entweder in einer anderen Länge bereitgestellt werden, oder die bestehenden Komponenten müssten "irgendwie" aneinandergekoppelt werden, wobei dann nur ein Sekundärteil bereitgestellt werden könnte, das ein ganzzahliges Vielfaches der Länge des Sekundärteils 10 aufweist.

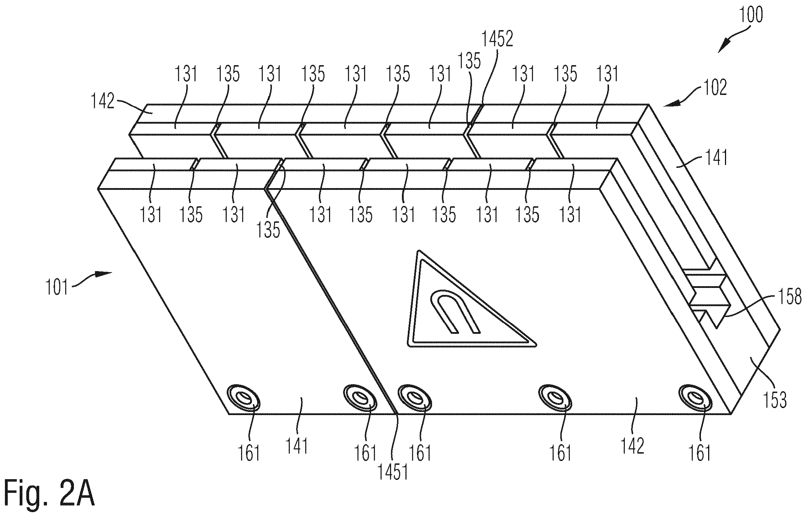

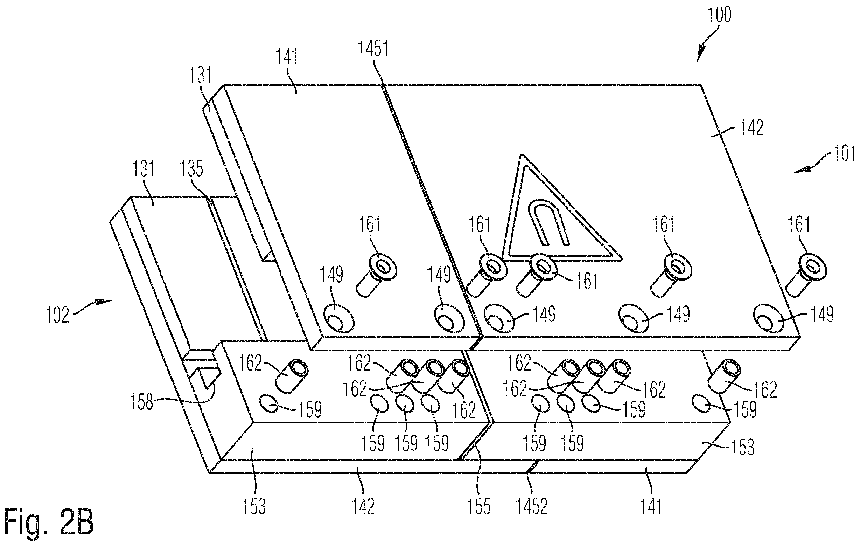

Hier setzt die vorliegende Erfindung an. Vorgeschlagen wird ein Bauteilsatz zur Ausbildung eines Sekundärteils 100 für einen Linearmotor mit einer Länge, die wenigstens ein ganzzahliges Vielfaches des Doppelten einer Einheitslänge beträgt. Beispielhafte Ausführungsformen eines mit dem Bauteilsatz ausgebildeten Sekundärteils sind in den Figuren 2A-4C veranschaulicht.

Der Bauteilsatz umfasst eine Vielzahl identisch dimensionierter Magnetpolplatten 131. Die Länge (in Längsrichtung des Sekundärteils 100) einer jeweiligen Magnetpolplatte 131 kann die Einheitslänge sein und einer halben magnetischen Periode entsprechen. Die Magnetpolplatten können eine quaderartige Form aufweisen, wie es in den Figuren 2A-4C dargestellt ist.

Die Magnetpolplatten 131 können jeweils als Permanentmagnet ausgebildet sein. Bei einer Ausführungsform enthält der Bauteilsatz nur einen einzigen Typ einer Magnetpolplatte; d.h., alle Magnetpolplatten 131 des Bauteilsatzes sind identisch ausgebildet.

Zu dem Bauteilsatz gehört weiter eine Vielzahl von Halterungen 141, 142. Jede der Halterungen 141, 142 ist zur Aufnahme wenigstens zwei der Magnetpolplatten 131 ausgebildet, und zwar derart, dass die Magnetpolplatten 131 in Längsrichtung des Sekundärteils nebeneinander angeordnet sind.

Zum Beispiel umfasst der Bauteilsatz genau zwei Typen von Halterungen: Identisch zueinander dimensionierte erste Halterungen 141, die ausgebildet sind, genau zwei Magnetpolplatten 131 aufzunehmen, sowie identisch zueinander dimensionierte zweite Halterungen 142, die ausgebildet sind, genau vier Magnetpolplatten 131 aufzunehmen. Die zweiten Halterungen 142 sind also zum Beispiel genau doppelt so lang dimensioniert wie jede der ersten Halterungen 141, sodass sie dadurch ausgebildet sind, die doppelte Anzahl von Magnetpolplatten 131 aufzunehmen.

Die Magnetpolplatten 131 können ausgebildet sein, an den Halterungen 141, 142 befestigt zu werden, zum Beispiel indem sie flächig auf den Halterungen 141, 142 angebracht werden, zum Beispiel durch einen Klebevorgang oder dergleichen. Alternativ können die Magnetpolplatten 131 natürlich auch in anderer Weise an den Halterungen 141, 142 befestigt werden.

An dieser Stelle sei noch einmal betont, dass der Bauteilsatz die Magnetpolplatten 131 einerseits und die Halterungen 141, 142 andererseits nicht notwendigerweise als separate Bauteile bereithalten muss, sondern dass bei einer Ausführungsform die Halterungen 141, 142 bereits mit den Magnetpolplatten 131 bestückt sein können.

Zu dem Bauteilsatz gehört weiter eine Vielzahl Abstandsglieder 151, 153, 154, von der jedes zur beidseitigen Aufnahme von wenigstens je einer der Halterungen 141, 142 ausgebildet ist, wobei ein erstes Abstandsglied eine Länge aufweist, die um wenigstens eine Einheitslänge von der Länge einer der ersten Halterungen 141 abweicht.

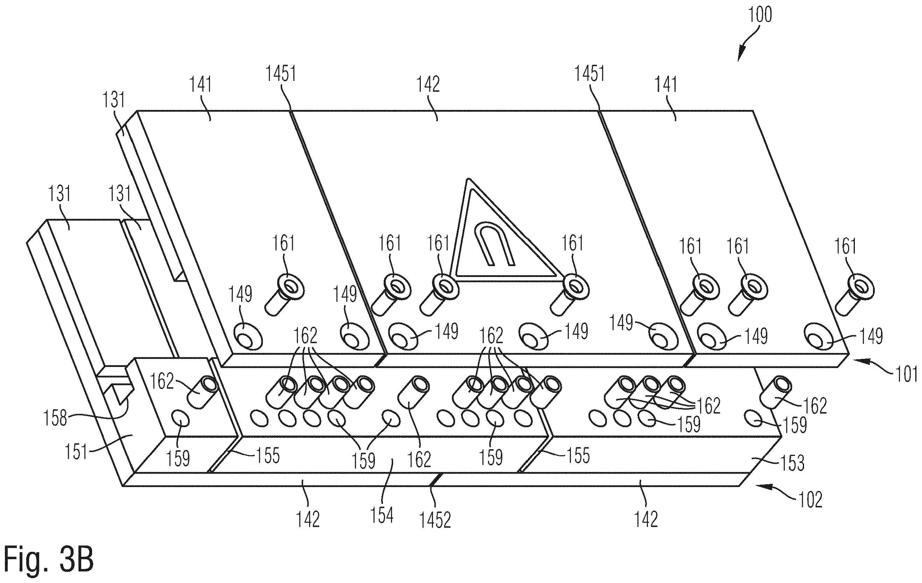

Die Figur 3B zeigt in diesem Zusammenhang beispielsweise ein erstes Abstandsglied 151 mit einer Länge entsprechend einer Einheitslänge, sowie ein zweites Abstandsglied 153 mit einer Länge entsprechend drei Einheitslängen sowie ein drittes Abstandsglied mit einer Länge entsprechend vier Einheitslängen. Zum Beispiel ist das dritte Abstandsglied 154 genauso lang wie eine jede der zweiten Halterungen 142. Das erste Abstandsglied 151 ist beispielsweise halb so lang wie eine jede der ersten Halterungen 141, und das zweite Abstandsglied 153 ist beispielsweise dreimal so lang, wie eine jede der ersten Halterungen 141.

Bei einer Ausführungsform ist der Bauteilsatz auf genau die vorstehend beschriebenen Komponenten beschränkt, nämlich erste Halterungen 141 (mit einer Länge entsprechend zwei Einheitslängen), zweite Halterungen 142 (eine Länge entsprechend vier Einheitslängen), erste Abstandsglieder 151 (mit einer Länge entsprechend einer Einheitslänge), zweite Abstandsglieder 153 (mit einer Länge entsprechend drei Einheitslängen), dritte Abstandsglieder 154 (mit einer Länge entsprechend vier Einheitslängen), sowie die Magnetpolplatten 131 (mit einer Länge entsprechend einer Einheitslänge).

Optional bietet der Bauteilsatz noch Zubehörkomponenten, wie beispielsweise Befestigungsmittel 161, beispielsweise in Gestalt von Schrauben, stabilitätserhöhende Einlasshülsen 162 und dergleichen.

Mit den Komponenten des Bauteilsatzes können nunmehr verschiedene Sekundärteile 100 ausgebildet werden, die eine theoretisch beliebige Länge aufweisen, und bei denen sichergestellt ist, dass an einem Übergang 135 zwischen zwei in Längsrichtung benachbarten Magnetpolplatten 131 maximal eine der Halterungen 141, 142 oder eines der Abstandsglieder 151, 153, 154 abschließt.

Auf diese Weise können Halterungsübergänge 1451, 1452 sowie Abstandsgliedübergänge 155 zueinander versetzt sein, was nunmehr mit Blick auf die Ausführungsbeispiele gemäß den Figuren 2A-4C noch näher erläutert werden wird.

Die Figuren 2A-B zeigen eine perspektivische Ansicht eines Ausschnitts eines Sekundärteils 100, das eine Länge entsprechend sechs Einheitslängen aufweist. Dieses Sekundärteil 100 wird zum Beispiel ausgebildet, indem zwei zweite Abstandsglieder 153 (die jeweils eine Länge entsprechend drei Einheitslängen aufweisen) in Längsrichtung nebeneinander angeordnet werden. An beiden Seiten der zweiten Abstandsglieder 153 wird je eine erste Halterung 141 und eine zweite Halterung 142 angeordnet, und zwar derart, dass auf der einen Sekundärteilseite 101 die erste Halterung 141 der auf der anderen Sekundärteilseite 102 befindlichen zweiten Halterung 142 gegenüberliegt und umgekehrt. Dadurch ist der Halterungsübergang 1452 auf der zweiten Sekundärteilseite 102 zum ersten Halterungsübergang 1451 auf der ersten Sekundärteilseite 101 um zwei Einheitslängen versetzt. Gleichzeitig ist der Abstandsgliedübergang 155 zu jedem dieser Halterungsübergange 1451 und 1452 um eine Einheitslänge versetzt.

Die Magnetpolplatten 131 weisen jeweils auf einer ersten Seite einen ersten magnetischen Pol (z.B. "Nord") sowie auf einer zweiten Seite einen zweiten, zum ersten komplementären Pol (z.B. "Süd") auf. Entlang der Längsrichtung des Sekundärteils 100 sind die Magnetpolplatten 131 seitenalternierend angeordnet. Bei der Installation des Sekundärteils 100 wird derart vorgegangen, dass bei allen Magnetpolplattenpaaren (die den Pfad für das Primärteil ausbilden können), die jeweils durch eine Magnetpolplatte 131 auf der ersten Seite 101 und eine Magnetpolplatte 131 auf der zweiten Seite 102 des Sekundärteils 100 gebildet werden, eine erste Magnetpolplattenseite (Nordpol) der einen Magnetpolplatte 131 einer zweiten Magnetpolplattenseite (Südpol) der anderen Magnetpolplatte 131 zugewandt ist. Diese Anordnung von Magnetpolplatten ist üblich, wie bspw. die eingangs schon zitierte US 4,749,921 zeigt (s. bspw. Fig. 9 oder Fig. 10). Entlang der Längsrichtung des Sekundärteils 100 sind die Magnetpolplatten also auf beiden Sekundärteilseiten polalternierend angeordnet ("Nord-Süd-Nord-Süd-Nord-Süd..."), wobei die Reihenfolge an der einen Sekundärteilseite 101 komplementär ist zur Reihenfolge auf der anderen Sekundärteilseite 102 ("Süd-Nord-Süd-Nord-Süd-Nord..."), womit sichergestellt ist, dass sich Nord- und Südpol stets gegenüberliegen.

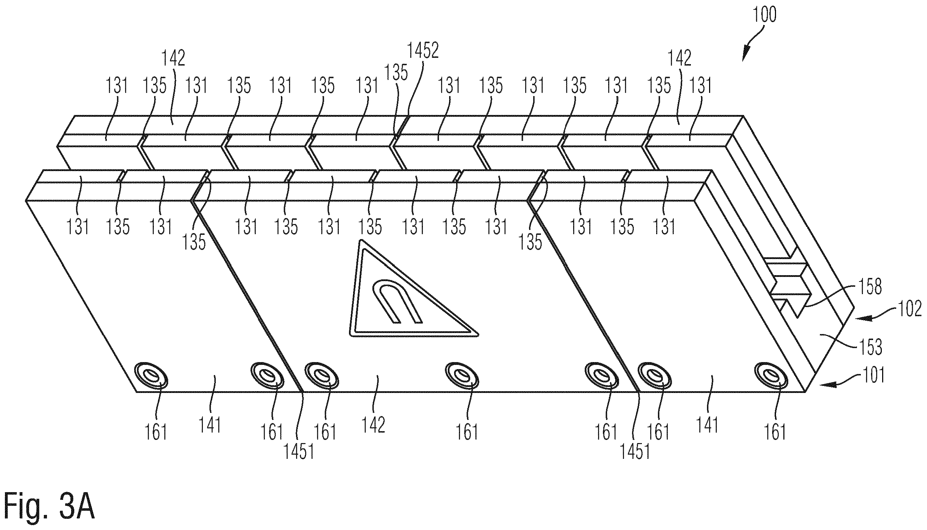

Bei dem Beispiel gemäß den Figuren 3A-B weist das Sekundärteil 100 eine Länge entsprechend acht Einheitslängen auf. Hierzu wird beispielsweise auf der einen Sekundärteilseite 101 eine zweite Halterung 142 platziert, die zur Rechten und zur Linken von je einer ersten Halterung 141 flankiert wird. Auf der gegenüberliegenden anderen Seite 102 sind zwei zweite Halterungen 142 angeordnet, sodass der dort zwischen den beiden zweiten Halterungen 142 ausgebildete Halterungsübergang 1452 zu den beiden Halterungsübergängen 1451 auf der ersten Sekundärteilseite 101 um zwei Einheitslängen versetzt ist. Die Halterungen 141, 142 sind beispielsweise an einem ersten Abstandsglied 151, einem zweiten Abstandsglied 153 sowie einem dritten Abstandsglied 154 befestigt, wie in der Fig. 3B veranschaulicht. Die Übergänge 155 zwischen den Abstandsgliedern 151 und 154 bzw. 154 und 153 sind wiederum versetzt zu sowohl dem Halterungsübergang 1452 auf der zweiten Sekundärteilseite 102 als auch zu den Halterungsübergängen 1451 auf der ersten Sekundärteilseite 101.

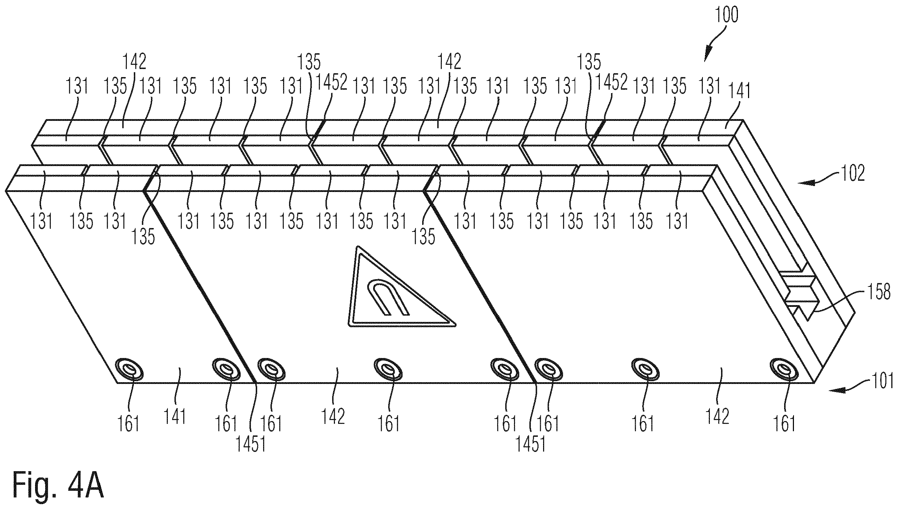

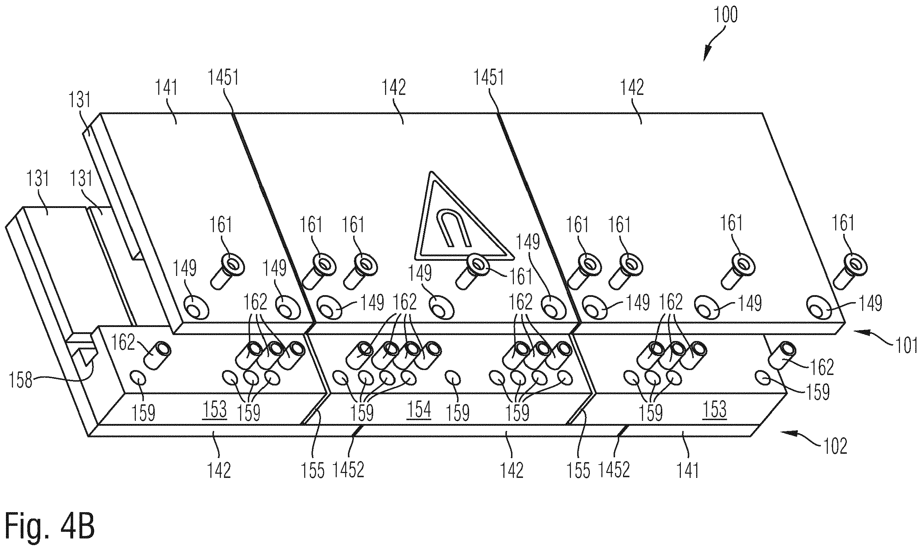

Als letztes Beispiel zeigen die Figuren 4A-C ein Sekundärteil 100 mit einer Länge entsprechend zehn Einheitslängen. Hierzu sind beispielsweise auf jeder Sekundärteilseite 101, 102 je zwei zweite Halterungen 142 und je eine erste Halterung 141 vorgesehen, und zwar in einer Art und Weise, dass alle Halterungsübergänge 1452 an der zweiten Sekundärteilseite 102 gegenüber den Halterungsübergängen 1451 an der ersten Sekundärteilseite 101 versetzt sind, wobei der Versatz wieder jeweils zwei Einheitslängen entspricht. Das Sekundärteil 100 umfasst zum Beispiel zwei zweite Abstandsglieder 153 und ein drittes Abstandsglied 154, das mittig zu den beiden zweiten Abstandsgliedern 153 angeordnet ist. So ist wiederum sichergestellt, dass auch die Übergänge 155 zwischen den Abstandsgliedern 153, 154 zu den allen Halterungsübergängen 1451, 1452 versetzt sind.

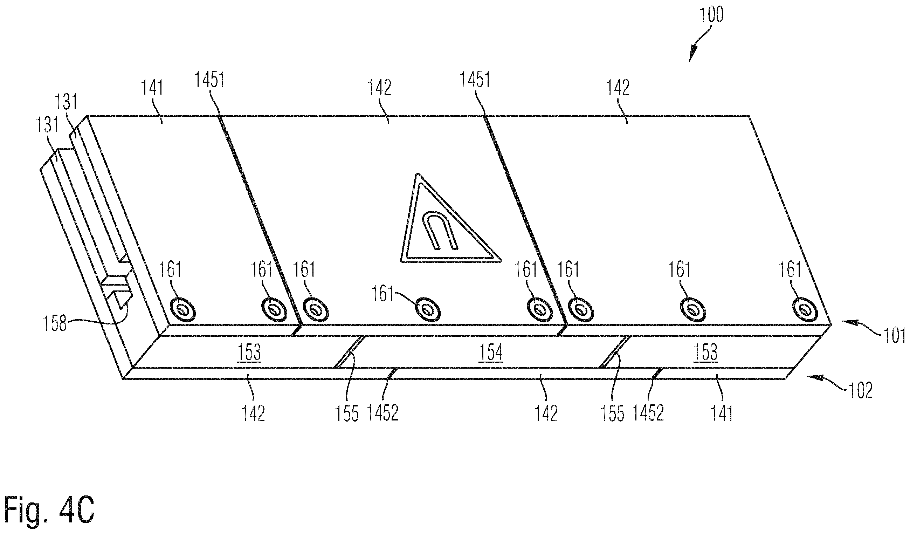

Wie auch Fig. 4C zeigt, kann also bei jedem durch die Komponenten des Bauteilsatzes ausgebildeten Sekundärteil 100 sichergestellt sein, dass entlang der gesamten Länge des Sekundärteils 100 an keiner Position zwei der Halterungen 141, 142 oder eine der Halterungen 141, 142 und eines der Abstandsglieder 151, 153, 154 abschließt. Vielmehr ist sichergestellt, dass an jeder Position maximal eine dieser Komponenten abschließt.

Die oben beschriebenen drei Beispiel veranschaulichen, dass mittels den drei Komponententypen Abstandsglieder, Halterungen und Magnetpolplatten des Bauteilsatzes in flexibler Weise Sekundärteile 100 beliebiger Länge ausgebildet werden können, die eine hohe Stabilität aufweisen.

Wie gesagt kann der Bauteilsatz optional auch Befestigungsmittel 161, beispielsweise in Gestalt von Schrauben, sowie Einlasshülsen 162 bereithalten. Die Halterungen 141,142 können jeweils mit einer oder mehreren Durchlässen 149 versehen sein, die an die Befestigungsmittel 161 angepasst sind. Die Abstandsglieder 151, 153, 154 können jeweils mit einen oder mehreren Aussparungen 159 versehen sein, in die die Befestigungsmittel 161 nach Durchführung durch die Durchlässe 149 greifen können.

Die Abstandsglieder 151, 153, 154 können zum Beispiel jeweils als Kunststoffspritzgussteil oder als Aluminiumgussteil gefertigt sein. Daher kann es zweckmäßig sein, dass die Befestigungsmittel 161 über die Einlasshülsen 162 in die Aussparungen 159 geführt werden.

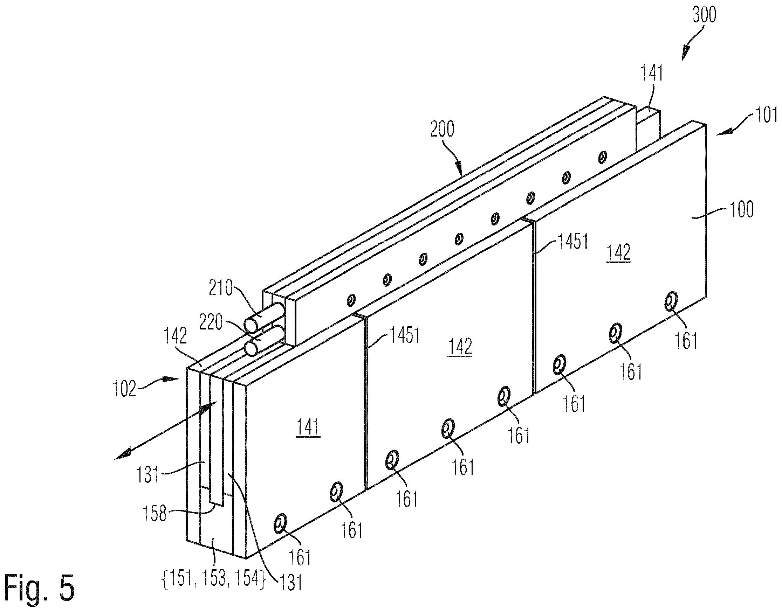

Fig. 5 zeigt schließlich exemplarisch und schematisch einen Ausschnitt einer perspektivischen Ansicht eines Linearmotors 300. Der Linearmotor 300 kann ein eisenloser Linearmotor 300 sein, dessen Primärteil 200 mit kernlosen Spulen versehen ist, die über eine Stromzuführung 210 mit einem Strom beaufschlagt werden können. Über eine Kabelleitung 220 können z.B. ein oder mehrere Messsignale ausgelesen werden, wie eine Temperatur, z.B. eine Temperatur an einer Spulen des Primärteils 200. Das Sekundärteil 100 des Linearmotors 300 ist beispielsweise gemäß einer der Ausführungsbeispiele nach Fig. 2A-4C ausgebildet, wobei die Fig. 5 das Sekundärteil 100 nur in einer schematischen Ansicht zeigt.

Die Abstandsglieder 151, 153, 154 können jeweils mit einer Nut 158 versehen sein, die eine Führung für das Primärteil 200 des Linearmotors 300 ausbilden können.

Das Primärteil 200 kann insbesondere eine oder mehrere kernlose Spulen aufweisen, die in einem Gehäuse des Primärteils 200 integriert sein können, welches zwischen den beiden Sekundärteilseiten 101 und 102 entlanggleiten kann. Die beiden Sekundärteilseiten 101,102 können also einen Pfad für das Primärteil 200 des (z.B. eisenlosen) Linearmotors 300 definieren. Das Primärteil 200 kann in einer Art und Weise ausgebildet sein, wie es in der europäischen Patentanmeldung mit der Nummer EP17178938.1 beschrieben ist.

## Patentansprüche

1. Bauteilsatz zur Ausbildung eines Sekundärteils (100) für einen Linearmotor mit einer Länge, die wenigstens ein ganzzahliges Vielfaches des Doppelten einer Einheitslänge beträgt, umfassend
- eine Vielzahl identisch dimensionierter Magnetpolplatten (131), wobei jede Magnetpolplatte (131) die Einheitslänge aufweist;
- eine Vielzahl von im wesentlichen rechteckförmigen Halterungen (141, 142), von der jede zur Aufnahme von wenigstens zwei der Magnetpolplatten (131) ausgebildet ist, wobei die Halterungen wenigstens zwei identisch dimensionierte erste Halterungen (141) und wenigstens eine zweite Halterung (142) umfassen,
- eine Vielzahl Abstandsglieder (151, 153, 154), von der jedes zur beidseitigen Aufnahme von wenigstens je einer der Halterungen (141, 142) ausgebildet ist, wobei ein erstes Abstandsglied (151) eine Länge aufweist, die um wenigstens eine Einheitslänge von der Länge einer der ersten Halterungen (141) abweicht;
**dadurch gekennzeichnet, dass**
die wenigstens eine zweite Halterung (142) mindestens doppelt so lang dimensioniert ist wie jede der ersten Halterungen (141), sodass sie wenigstens die doppelte Anzahl von Magnetpolplatten (131) aufnehmen kann.

2. Bauteilsatz nach Anspruch 1, wobei das mit den Magnetpolplatten (131), den Halterungen (141, 142) und den Abstandsgliedern (153) ausgebildete Sekundärteil (100) eine erste Seite (101) und eine zweite Seite (102) aufweist, die einen Pfad für ein Primärteil des Linearmotors definieren, wobei an beiden Seiten (101, 102) jeweils wenigstens zwei der Halterungen (141, 142) vorgesehen sind, und wobei wenigstens ein erster Halterungsübergang (1451) an der ersten Seite (101), der zwischen den dort befindlichen Halterungen (141, 142) ausgebildet wird, in Längsrichtung des Sekundärteils (100) um wenigstens eine Einheitslänge von einem zweiten Halterungsübergang (1452) an der zweiten Seite (102), der zwischen den dort befindlichen Halterungen (142) ausgebildet wird, versetzt ist.

3. Bauteilsatz nach Anspruch 2, wobei ein zwischen zwei benachbarten Abstandsgliedern (151) ausgebildeter Abstandsgliedübergang (155) in Längsrichtung des Sekundärteils (100) um wenigstens eine Einheitslänge sowohl von dem ersten Halterungsübergang (1451) als auch dem zweiten Halterungsübergang (1452) versetzt ist.

4. Bauteilsatz nach einem der vorstehenden Ansprüche, wobei die Magnetpolplatten (131), die Halterungen (141, 142) und die Abstandsglieder (153) derart konfiguriert sind, dass im Wesentlichen allein durch Anordnung einer Auswahl dieser Komponenten entlang einer Längsrichtung das Sekundärteil (100) mit einer magnetischen Weglänge ausgebildet werden kann, die ein Beliebiges ganzzahliges Vielfaches des Doppelten der Einheitslänge beträgt.

5. Bauteilsatz nach Anspruch 4, wobei die Anordnung der Magnetpolplatten (131) entlang der Längsrichtung, die Anordnung der Halterungen (141, 142) entlang der Längsrichtung sowie die Anordnung der Abstandsglieder (151, 153, 154) entlang der Längsrichtung jeweils die betragsmäßig gleiche Länge aufweisen.

6. Bauteilsatz nach einem der vorstehenden Ansprüche, wobei die Halterungen nur eine Vielzahl der ersten Halterungen (141) und eine Vielzahl der zweiten Halterung (142) umfassen, wobei jede der zweiten Halterungen (142) doppelt so lang dimensioniert ist wie jede der ersten Halterungen (141).

7. Bauteilsatz nach einem der vorstehenden Ansprüche, wobei die Abstandsglieder nur umfassen:
- erste Abstandsglieder (151) mit einer Länge entsprechend der Einheitslänge;
- zweite Abstandsglieder (153) mit einer Länge entsprechend einem Dreifachen der Einheitslänge; und
- dritte Abstandsglieder (154) mit einer Länge entsprechend einem Vierfachen der Einheitslänge.

8. Bauteilsatz nach einem der vorstehenden Ansprüche, wobei die Magnetpolplatten nur einen Typ einer Magnetpolplatte umfassen.

9. Bauteilsatz nach einem der vorstehenden Ansprüche, wobei die Einheitslänge eine halbe magnetische Periode ist.

10. Bauteilsatz nach einem der vorstehenden Ansprüche, wobei die Abstandsglieder (151, 153, 154) eine Nut (158) aufweisen, die eine Führung für das Primärteil des Linearmotors bereitstellt.

11. Bauteilsatz nach einem der vorstehenden Ansprüche, wobei die Abstandsglieder (151, 153, 154) jeweils wenigstens eine Aussparung (159) aufweisen, in die ein Befestigungsmittel (161, 162) zur Befestigung einer der Halterungen (141, 142) eingreifen kann.

12. Bauteilsatz nach einem der vorstehenden Ansprüche, wobei die Abstandsglieder (151, 153, 154) jeweils als Kunststoffspritzgussteil oder als Aluminiumgussteil ausgebildet sind.

13. Bauteilsatz nach einem der vorstehenden Ansprüche, wobei die Magnetpolplatten (131) ausgebildet sind, an die Halterungen geklebt zu werden.

14. Sekundärteil (100) für einen Linearmotor mit einer Länge, die wenigstens ein ganzzahliges Vielfaches des Doppelten einer Einheitslänge beträgt, wobei das Sekundärteil (100) aus Komponenten eines Bauteilsatz nach Anspruch 2 ausgebildet ist.

15. Eisenloser Linearmotor (300), wobei der eisenlose Linearmotor ein Sekundärteil (100) nach Anspruch 14 aufweist.

## Claims

1. Set of parts for forming a secondary part (100) for a linear motor with a length which amounts to at least an integer multiple of twice a unit length, comprising
- a multiplicity of identically dimensioned magnetic pole plates (131), wherein each magnetic pole plate (131) has the unit length;
- a multiplicity of substantially rectangular holders (141, 142), each of which is designed to receive at least two of the magnetic pole plates (131), wherein the holders comprise at least two identically dimensioned first holders (141) and at least one second holder (142),
- a multiplicity of spacing elements (151, 153, 154), each of which is designed to receive, on both sides, at least in each case one of the holders (141, 142), wherein a first spacing element (151) has a length that differs from the length of one of the first holders (141) by at least one unit length;
**characterized in that**
the at least one second holder (142) is dimensioned to be at least twice as long as each of the first holders (141) such that it can receive at least twice the number of magnetic pole plates (131).

2. Set of parts according to Claim 1, wherein the secondary part (100) formed with the magnetic pole plates (131), the holders (141, 142) and the spacer elements (153) has a first side (101) and a second side (102) which define a path for a primary part of the linear motor, wherein at least two of the holders (141, 142) are provided at each of the two sides (101, 102), and wherein at least one first holder transition (1451) at the first side (101), which at least one first holder transition is formed between the holders (141, 142) situated there, is offset in the longitudinal direction of the secondary part (100) by at least one unit length with respect to a second holder transition (1452) at the second side (102), which second holder transition is formed between the holders (142) situated there.

3. Set of parts according to Claim 2, wherein a spacing element transition (155) formed between two adjacent spacing elements (151) is offset in the longitudinal direction of the secondary part (100) by at least one unit length both with respect to the first holder transition (1451) and with respect to the second holder transition (1452).

4. Set of parts according to any one of the preceding claims, wherein the magnetic pole plates (131), the holders (141, 142) and the spacing elements (153) are configured such that, substantially exclusively through arrangement of a selection of these components along a longitudinal direction, the secondary part (100) can be configured with a magnetic path length that amounts to any integer multiple of twice the unit length.

5. Set of parts according to Claim 4, wherein the arrangement of the magnetic pole plates (131) along the longitudinal direction, the arrangement of the holders (141, 142) along the longitudinal direction and the arrangement of the spacing elements (151, 153, 154) along the longitudinal direction each have the same length in terms of magnitude.

6. Set of parts according to any one of the preceding claims, wherein the holders comprise only a multiplicity of the first holders (141) and a multiplicity of the second holders (142), wherein each of the second holders (142) is dimensioned to be twice as long as each of the first holders (141).

7. Set of parts according to any one of the preceding claims, wherein the spacing elements comprise only:
- first spacing elements (151) with a length corresponding to the unit length;
- second spacing elements (153) with a length corresponding to three times the unit length; and
- third spacing elements (154) with a length corresponding to four times the unit length.

8. Set of parts according to any one of the preceding claims, wherein the magnetic pole plates comprise only one type of magnetic pole plate.

9. Set of parts according to any one of the preceding claims, wherein the unit length is half of one magnetic period.

10. Set of parts according to any one of the preceding claims, wherein the spacing elements (151, 153, 154) have a groove (158) which provides a guide for the primary part of the linear motor.

11. Set of parts according to any one of the preceding claims, wherein the spacing elements (151, 153, 154) each have at least one cutout (159) into which a fastening means (161, 162) for the fastening of one of the holders (141, 142) can engage.

12. Set of parts according to any one of the preceding claims, wherein the spacing elements (151, 153, 154) are each formed as a plastics injection-moulded part or as an aluminium cast part.

13. Set of parts according to any one of the preceding claims, wherein the magnetic pole plates (131) are designed to be adhesively bonded to the holders.

14. Secondary part (100) for a linear motor with a length which amounts to at least an integer multiple of twice a unit length, wherein the secondary part (100) is formed from components of a set of parts according to Claim 2.

15. Ironless linear motor (300), wherein the ironless linear motor has a secondary part (100) according to Claim 14.

## Revendications

1. Ensemble de pièces pour la formation d'une partie secondaire (100) pour un moteur linéaire ayant une longueur qui est au moins un multiple entier du double d'une longueur unitaire, comprenant :
- une pluralité de plaques polaires magnétiques (131) dimensionnées de manière identique, chaque plaque polaire magnétique (131) présentant la longueur unitaire ;
- une pluralité de supports essentiellement rectangulaires (141, 142), dont chacun est configuré pour la réception d'au moins deux des plaques polaires magnétiques (131), les supports comprenant au moins deux premiers supports (141) dimensionnés de manière identique et au moins un deuxième support (142),
- une pluralité d'éléments espaceurs (151, 153, 154), dont chacun est configuré pour la réception des deux côtés à chaque fois d'au moins un des supports (141, 142), un premier élément espaceur (151) présentant une longueur qui diffère d'au moins une longueur unitaire de la longueur d'un des premiers supports (141) ;
**caractérisé en ce que**
l'au moins un deuxième support (142) est dimensionné au moins deux fois plus long que chacun des premiers supports (141), de telle sorte qu'il peut recevoir au moins deux fois le nombre de plaques polaires magnétiques (131).

2. Ensemble de pièces selon la revendication 1, dans lequel la partie secondaire (100) formée avec les plaques polaires magnétiques (131), les supports (141, 142) et les éléments espaceurs (153) comprend un premier côté (101) et un deuxième côté (102), qui définissent un trajet pour une partie primaire du moteur linéaire, au moins deux des supports (141, 142) étant prévus à chaque fois sur les deux côtés (101, 102), et au moins une première transition de support (1451) sur le premier côté (101), qui est formée entre les supports (141, 142) s'y trouvant, étant décalée dans la direction longitudinale de la partie secondaire (100) d'au moins une longueur unitaire d'une deuxième transition de support (1452) sur le deuxième côté (102), qui est formée entre les supports (142) s'y trouvant.

3. Ensemble de pièces selon la revendication 2, dans lequel une transition d'élément espaceur (155) formée entre deux éléments espaceurs voisins (151) est décalée dans la direction longitudinale de la partie secondaire (100) d'au moins une longueur unitaire aussi bien de la première transition de support (1451) que de la deuxième transition de support (1452).

4. Ensemble de pièces selon l'une quelconque des revendications précédentes, dans lequel les plaques polaires magnétiques (131), les supports (141, 142) et les éléments espaceurs (153) sont configurés de telle sorte qu'essentiellement uniquement par l'agencement d'une sélection de ces composants le long d'une direction longitudinale, la partie secondaire (100) peut être formée avec une longueur de voie magnétique qui est un multiple entier quelconque du double de la longueur unitaire.

5. Ensemble de pièces selon la revendication 4, dans lequel l'agencement des plaques polaires magnétiques (131) le long de la direction longitudinale, l'agencement des supports (141, 142) le long de la direction longitudinale, ainsi que l'agencement des éléments espaceurs (151, 153, 154) le long de la direction longitudinale présentent à chaque fois la même longueur en termes de montant.

6. Ensemble de pièces selon l'une quelconque des revendications précédentes, dans lequel les supports comprennent uniquement une pluralité des premiers supports (141) et une pluralité des deuxième supports (142), chacun des deuxièmes supports (142) étant dimensionné deux fois plus long que chacun des premiers supports (141).

7. Ensemble de pièces selon l'une quelconque des revendications précédentes, dans lequel les éléments espaceurs comprennent uniquement :
- des premiers éléments espaceurs (151) ayant une longueur correspondant à la longueur unitaire ;
- des deuxièmes éléments espaceurs (153) ayant une longueur correspondant au triple de la longueur unitaire ; et
- des troisièmes éléments espaceurs (154) ayant une longueur correspondant au quadruple de la longueur unitaire.

8. Ensemble de pièces selon l'une quelconque des revendications précédentes, dans lequel les plaques polaires magnétiques comprennent uniquement un type de plaque polaire magnétique.

9. Ensemble de pièces selon l'une quelconque des revendications précédentes, dans lequel la longueur unitaire est une demi-période magnétique.

10. Ensemble de pièces selon l'une quelconque des revendications précédentes, dans lequel les éléments espaceurs (151, 153, 154) comprennent une rainure (158), qui fournit un guide pour la partie primaire du moteur linéaire.

11. Ensemble de pièces selon l'une quelconque des revendications précédentes, dans lequel les éléments espaceurs (151, 153, 154) comprennent chacun au moins un évidement (159), dans lequel un moyen de fixation (161, 162) pour la fixation d'un des supports (141, 142) peut pénétrer.

12. Ensemble de pièces selon l'une quelconque des revendications précédentes, dans lequel les éléments espaceurs (151, 153, 154) sont chacun configurés sous la forme d'une partie moulée par injection en matière plastique ou sous la forme d'une partie coulée en aluminium.

13. Ensemble de pièces selon l'une quelconque des revendications précédentes, dans lequel les plaques polaires magnétiques (131) sont configurées pour être collées sur les supports.

14. Partie secondaire (100) pour un moteur linéaire ayant une longueur qui est au moins un multiple entier du double d'une longueur unitaire, la partie secondaire (100) étant formée à partir de composants d'un ensemble de pièces selon la revendication 2.

15. Moteur linéaire sans fer (300), le moteur linéaire sans fer comprenant une partie secondaire (100) selon la revendication 14.
